# EUROPÄISCHE PATENTANMELDUNG

(11) **EP 0 859 213 A1**
(43) Veröffentlichungstag der Anmeldung: **19.08.1998**
(21) Anmeldenummer: 98102305.4
(22) Anmeldetag: 11.02.1998
(51) Int. Cl.: G01B 7/30, G01D 5/14

(54) **Drehwinkelsensor mit in einem Ringjoch angeordneten Hall-Elementen**

(30) Priorität: 15.02.1997 DE 19705835
(71) Anmelder: ITT MANUFACTURING ENTERPRISES, INC., Wilmington, Delaware 19801 (US)
(72) Erfinder: Osterfeld, Martin, 74321 Bietigheim-Bissingen (DE); Grabmaier, Anton, 74321 Bietigheim-Bissingen (DE)
(74) Vertreter: Portwich, Peter

(57) **Zusammenfassung**

Die Erfindung betrifft eine Meßeinrichtung zur Drehwinkelmessung, bei der das mit dem zu messenden Drehwinkel (λ)sich drehende Feld eines Magnetes (1) mit Hilfe von Hall-Elementen (12,13) zur Drehwinkelmessung ausgenutzt wird. Zur einfachen Ausgestaltung und größeren Empfindlichkeit wird das sich tangential in einem ringförmigen Joch (11) erstreckende Feld zur Feststellung des Drehwinkels mittels einer oder zweier Hall-Elemente (12,13) gemessen.

## Beschreibung

Die Erfindung betrifft einen Drehwinkelsensor, bei dem die Drehstellung eines Permanentmagneten über Hall-Elemente ausgewertet wird. Bei derartigen Sensoren ist die Drehlage des in seiner Winkelstellung zu bestimmenden Körpers mit mindestens einem Permanentmagneten gekoppelt. Bei Änderung der Drehlage ändert sich auch die Verteilung des zugehörigen Magnetfelds gegenüber einem ortsfest angeordneten Hall-Element. Aufgrund der an dem Hall-Element gemessenen Spannung läßt sich somit eine Aussage über die Winkelstellung des mit dem Permanentmagneten gekoppelten Körpers angeben.

Aus der US-PS 4 829 248 ist ein Drehkörper bekannt, in den eine Reihe von Permanentmagneten an dessen äußeren Umfang angeordnet sind. Wird der Körper gedreht, so ändert sich die Größe und die Richtung des magnetischen Feldes, welches zwei Hall-Elemente durchdringt, welche im Bereich des Außenumfangs gegenüber dem sich drehenden Körper ortsfest angeordnet sind. Nachteilig bei dieser Meßeinrichtung ist es, daß diese eine große Anzahl von Permanentmagneten benötigt. Außerdem ist diese Meßeinrichtung nur dafür ausgelegt, die Relativbewegung der Körperoberfläche gegenüber den Hall-Sensoren zu bewerten. Eine Absolutmessung der Stellung des Körpers auch innerhalb eines nur kleinen Winkelbereichs ist mit der aus der US-PS 4 829 248 ersichtlichen Meßeinrichtung nicht möglich.

Aus der US-PS 5 325 005 ist ein Synchronmotor bekannt, dessen Drehfeld in Abhängigkeit von der Drehlage des Ankers gesteuert werden soll. Dabei dienen die Hall-Sonden als Auslöser zur Weiterschaltung des Drehfeldes.

Die Erfindung geht daher aus von einem Drehwinkelsensor der sich aus dem Oberbegriff des Anspruchs 1 ergebenden Gattung. Aufgabe der Erfindung ist es, einen derartigen Drehwinkelsensor zu vereinfachen und gleichzeitig den meßbaren Winkelbereich für eine Absolutwertmessung des Drehwinkels zu vergrößern.

Die Aufgabe wird durch die sich aus dem kennzeichnenden Teil des Anspruchs 1 ergebende Merkmalskombination gelöst. Die Erfindung besteht im Prinzip also darin, das Joch gleichzeitig als Aufnahmeeinrichtung für die nachfolgend vielfach als Hall-Elemente bezeichneten Hall-Sonden auszugestalten, wodurch sich ein sehr einfacher Aufbau für die Sensoreinrichtung ergibt. Gleichzeitig dient das ringförmige Joch als Schirm gegenüber Fremdfeldern. Zusätzlich wird die Tatsache ausgenutzt, daß innerhalb des Jochs das von dem vorzugsweise als Permanentmagneten ausgestalteten Magneten ausgehende magnetische Feld sehr dicht geführt wird, wodurch der erfindungsgemäße Drehsensor sehr empfindlich arbeitet. Hinsichtlich des Jochs ergibt sich eine besonders einfache Ausgestaltung durch Anwendung der Merkmale nach Anspruch 2. Danach hat das Joch eine im wesentlichen ringförmige Gestalt. Dabei ist zu beachten, daß an den Stellen des Jochs, an denen die Hall-Elemente eingefügt sind, dort das in dem Joch geführte Feld im wesentlichen durch die Hall-Elemente geleitet werden soll. Das bedeutet, daß hier der Querschnitt des Jochs in Richtung auf das (die) Hall-Element(e) verengt und das (die) Hall-Element(e) selbst in einem entsprechenden Luftspalt im Bereich der Verengung eingefügt sein sollte(n).

Um den Meßbereich zu vergrößern und gleichzeitig mit möglichst wenig Hall-Elementen auszukommen, empfiehlt sich in Weiterbildung der Erfindung die Merkmalskombination nach Anspruch 3. Danach sind die Hall-Elemente in einem Winkelumfang zueinander angeordnet, der kleiner als 180 Grad sein sollte. Vorzugsweise können die Hall-Elemente im Winkel von 90 Grad zueinander stehen bzw. im Bogenmaß einen Abstand von Π/2 voneinander haben.

Um die Wirkung der erfindungsgemäßen Sensoreinrichtung zu verbessern, empfiehlt sich in Weiterbildung der Erfindung die Merkmalskombination nach Anspruch 4. Hierdurch wird dafür gesorgt, daß die Feldstärke innerhalb des Jochs sich gleichmäßiger ändert. Anders ausgedrückt, die Bereiche mit niedrigerer Feldstärke innerhalb des Jochs lassen sich auf diese Weise vergrößern. Dies ist insofern günstig, als die Hall-Spannung in Abhängigkeit von dem Drehwinkel des Permanentmagneten sich gleichmäßiger ändert und sprunghafte Änderungen in Abhängigkeit von dem Drehwinkel vermieden werden.

Dieser Effekt läßt sich noch vergrößern durch die sich aus Anspruch 5 ergebenden Maßnahmen. Danach wird die zwischen den Polschuhen und dem Joch bestehende Übertrittsfläche für die Feldlinien erheblich vergrößert. Dieser Effekt läßt sich noch weiterhin dadurch verstärken, daß man die sich aus Anspruch 5 ergebenden Maßnahmen anwendet. Man erhält somit als Übertrittsfläche die äußere Mantelfläche eines Zylinders, wobei dieser Magnetzylinder sowohl als Hohlzylinder oder aber als Vollzylinder ausgestaltet sein kann.

Ein Ausführungsbeispiel der Erfindung wird nachfolgend anhand der Zeichnung erläutert. Darin zeigt:
- Fig. 1: ein erstes Ausführungsbeispiel der Erfindung
- Fig. 2: ein zweites Ausführungsbeispiel der Erfindung und
- Fig. 3: den ungefähren Verlauf der Feldstärke an den Hall-Elementen und damit in etwa den Verlauf der an den Hall-Elementen anliegenden Spannung, abhängig vom Drehwinkel.

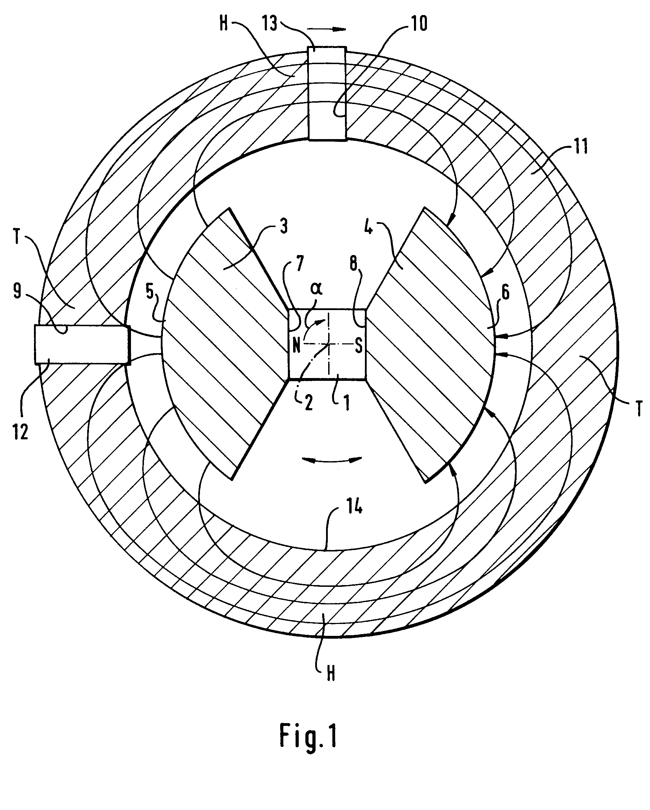

Fig. 1 zeigt einen Permanentmagneten 1 mit einem Nordpol N und einem Südpol S, welcher um eine senkrecht zur Betrachtungsebene Achse 2 drehbar gelagert ist. Der Magnet 1 kann eine quaderförmige oder kreiszylinderförmige Form besitzen. An die Pole N und S des Magneten 1 schließen sich Polschuhe 3,4 aus einem magnetisch leitenden Material, also beispielsweise Eisen an. Diese Polschuhe erweitern sich nach ihren von den Magneten 1 abgewandten Ende 5 bzw. 6 hin und können im Prinzip etwa die Querschnittsform eines Kreissektors haben, wobei der Innenteil des Kreissektors gegenüber den Permanentmagneten 2 derart abgeflacht ist, daß sich zwei etwa gleichförmige Anlageflächen 7,8 ergeben, die einen guten Übertritt der Magnetlinien von dem Permanentmagneten 1 in die Polschuhe 3,4 gewährleisten.

Der Permanentmagnet 1 mit seinen Polschuhen 3,4 ist von einem magnetisch leitenden Joch 11 umgeben, welches beispielsweise ebenfalls aus Eisen gebildet sein kann. Das ringförmige Joch 11 besitzt Ausnehmungen 9,10, in welche Hall-Elemente 12,13 eingefügt sind. Dabei sind die Ausnehmungen und die geometrische Ausgestaltung von Joch und Hall-Element derart ausgestaltet, daß der von dem Joch 11 geführte Magnetfluß im wesentlichen durch die Hall-Elemente 12,13 geführt sein sollte. Dementsprechend ist auch die Lage der Hall-Elemente so angeordnet, daß durch die Feldlinien in dem Joch 11 an diesen eine Spannung erzeugt wird, welche als Maß für die Winkelstellung des Magneten 1 in einer nicht dargestellten Auswerteeinrichtung ausgewertet wird.

Hinsichtlich der Ausnehmungen 9,10 können diese beispielsweise auch durch geeignete Trennstellen innerhalb des Jochs ausgestaltet sein, so daß sich das Joch aus mehreren Abschnitten zusammensetzt. Weiterhin können im Bereich der Ausnehmungen 9,10 Einschnürungen im Joch vorgenommen werden, um den Magnetfluß gezielt auf die räumlich vergleichsweise kleinen Hall-Elemente führen zu können. Wesentlich ist, daß Maßnahmen getroffen werden, welche den Magnetfluß in optimaler Weise zu den Hall-Elementen führen. Es ist dabei zu beachten, daß durch die Hall-Elemente im wesentlichen der tangentiale Magnetfluß innerhalb des Jochs die zu erzeugende Hall-Spannung bedingt und daß die Hall-Elemente dementsprechend ausgerichtet sein müssen.

Die Hall-Elemente stehen im Winkel 90 Grad zueinander, da hier in optimaler Weise die Drehstellung des Magneten 1 zwischen 0 und 360 Grad bewertet werden kann. Es sind aber auch andere Winkelstellungen zwischen den Hall-Elementen 12 und 13 möglich, die aber möglichst nicht bei 180 Grad liegen sollten, da hier insbesondere bei den Minimas die Meßergebnisse mehrdeutig sind.

In Fig. 1 ist der mögliche Verlauf der Feldlinien von den Enden 5,6 der Polschuhe zum Joch und innerhalb dieses Joches 11 angedeutet. Es zeigt sich, daß innerhalb des Joches Bereiche H mit hoher Dichte der Feldlinien und Bereiche T mit tiefer oder niedriger Dichte der Feldlinien festgestellt werden. Diese Bereiche wandern im Uhrzeigersinn oder entgegen des Uhrzeigersinns mit der Drehrichtung des Magneten 1 kreisförmig innerhalb des Joches 11. Damit zeigt sich, daß die Felddichte im Bereich der Ausnehmungen 9,10 sich in Abhängigkeit von der Winkelstellung des Magneten 1 ändert. Um eine stetige Änderung der Felddichte zu erreichen, empfiehlt sich, die Polschuhe in geeigneter Weise an die Jochform anzupassen. Im Ausführungsbeispiel nach Fig. 1 geschieht dies dadurch, daß die Enden 5,6 der Polschuhe 3,4 etwa die gleiche Krümmung aufweisen wie die innere Mantelfläche 14 des Jochs 11. Auch der dargestellte Abstand der Enden 5,6 von der inneren Mantelfläche 14 läßt sich an eine geeignete Verteilung der Feldstärke innerhalb des Jochs anpassen. Er kann beispielsweise sehr viel kleiner sein als in Fig. 1 dargestellt.

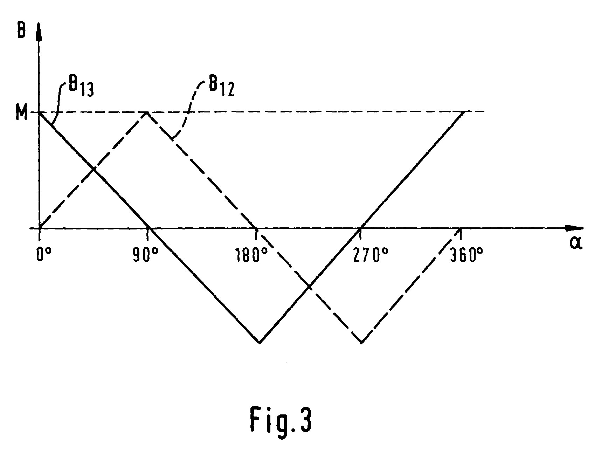

Fig. 3 zeigt nun in stark vereinfachter Form den Verlauf der Feldliniendichte B in Abhängigkeit von der Winkelstellung λ des Magneten 1, wobei angenommen ist, daß die in Fig. 1 dargestellte Lage des Magneten einen Winkel von 0 Grad besitzt. In dieser Stellung hat die Feldstärke B₁₂ im Bereich des Hall-Elementes 12 ein Minimum, was hier vereinfacht mit dem Wert Null angegeben ist, während die Feldstärke B₁₃ im Bereich des Hall-Elements 13 ein Maximum M hat, wie dies in Fig. 3 angedeutet ist. Dreht man nun den Magneten 1 um 90 Grad, beispielsweise im Uhrzeigersinn, so wandert das Magnetfeld in entsprechender Weise mit und das in Fig. 1 untenliegende Maximum erreicht nunmehr die Ausnehmung 9 des Hall-Elements 12, während dessen vorher dort befindliches Minimum zu der Ausnehmung 10 des Hall-Elements 13 wandert. Es liegt also jetzt am Hall-Element 12 die maximale Feldstärke M an, während am Hall-Element 13 sich ein Minimum befindet.

Aus Fig. 3 erkennt man, daß bei Verwendung nur eines einzigen Hall-Elementes beispielsweise des Hall-Elementes 12, ein Minimum mehrdeutig ist, da hier zwischen 0, 180 und 360 Grad nicht unterschieden werden kann. Hier hilft die Verwendung des zweiten Hall-Elementes 13, das eine ergänzende Information abgibt. Hat nämlich bei Minimum bei B₁₂ das Hall-Element gleichzeitig ein positives Maximum M, so beträgt die Winkelstellung des Hall-Elementes 12 damit 0 bzw. 360°. Hat das Hall-Element 13 dagegen ein negatives Maximum, so liegt das Minimum des Hall-Elements 12 bei 180 Grad. Entsprechendes gilt für alle zwischen 0 und dem Maximum liegenden mehrdeutigen Werte des Hall-Elements 12, die sich immer in ihrer Lage eindeutig bestimmen lassen.

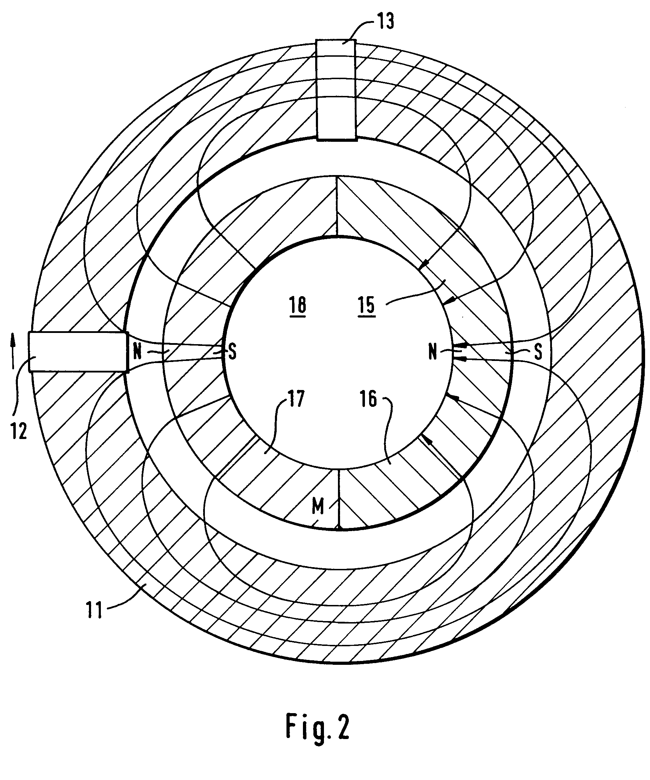

Fig. 2 zeigt eine etwas geänderte Ausgestaltung des Permanentmagneten. Der Permanentmagnet 15 hat eine im wesentlichen ringförmige Gestalt, wobei die durch die Buchstaben N und S angegebene Polverteilung angedeutet ist. Der Verlauf der Kraftlinien innerhalb des Magneten 15 ist nicht zwingend und hängt von dem Material und der geometrischen Ausgestaltung ab. Der ringförmige Magnet 15 ist in zwei Hälften 16,17 mit entgegengesetzter Polarisierung gespalten, der von dem Magneten 15 umschlossene Raum 18 kann aus Gewichtsgründen freigelassen werden. Der entsprechende Verlauf der Feldlinien ist in dem Innenraum 18 in Fig. 2 nicht eingezeichnet. Es kann aber auch der Innenraum 18 durch einen Magneten gebildet sein, der durch ein geeignetes ringförmiges Joch 15 umgeben ist. Wesentlich ist, daß der in Fig. 2 angedeutete Verlauf der Feldlinien erreicht wird, bei dem die unterschiedliche Dichte der Feldlinien innerhalb des Jochs 11 wesentlich ist. Hinsichtlich der Wirkungsweise ergeben sich keine Änderungen gegenüber Fig. 2, so daß das dort Gesagte analog auf die Wirkungsweise des Ausführungsbeispiels nach Fig. 2 angewendet werden kann.

Im Rahmen der Erfindung kann das Joch auch topfförmig ausgestaltet werden. Statt eines Permanentmagneten 1 kann das Magnetfeld auch mit Hilfe einer Induktionsspule gegebenenfalls mit einem geeigneten Kern gebildet werden. Für die Erfindung wesentlich ist, daß das in tangentialer Richtung innerhalb des Jochs verlaufende Feld durch die Hall-Sonden gemessen wird. Dies kann mit Hilfe nur einer einzigen Hall-Sonde 12 oder aber auch mit zwei Hall-Sonden 12,13 geschehen.

## Patentansprüche

1. Drehwinkelsensor, bei dem das Magnetfeld mindestens eines Magneten, vorzugsweise Permanentmagneten, mit einem Körper um die Drehachse des Körpers dreht, dessen Drehwinkel (α) gemessen werden soll, wobei außerhalb der Drehachse (2) mindestens eine Hall-Sonde (12,13) angeordnet ist, deren einer Auswerteeinrichtung zugeführte Spannung sich in Abhängigkeit von dem Drehwinkel (α) des Magnetfeldes ändert, dadurch **gekennzeichnet**, daß das Magnetfeld des Magneten (1) in einem den Magneten im wesentlichen kreisförmig umgebenden Joch zwischen den Polen (N/S) des Magneten (1) geführt ist und daß die Hall-Sonde (12,13) bzw. Sonden derart in das Joch (12) eingefügt ist (sind), daß sie durch das geführte Magnetfeld durchdrungen wird (werden).

2. Drehwinkelsensor nach Anspruch 1, dadurch **gekennzeichnet**, daß das Joch (11) im wesentlichen die Form eines Hohlzylinders hat, dessen Längsachse (2) mit der Drehachse des Körpers fluchtet.

3. Drehwinkelsensor nach Anspruch 1 oder 2, dadurch **gekennzeichnet**, daß zwei Hall-Sonden (12,13) in das Joch in einem Winkelabstand von 0 - 180 Grad, vorzugsweise 90 Grad angeordnet sind.

4. Drehsensor nach einem der vorangegangenen Ansprüche, dadurch **gekennzeichnet**, daß der als Permanentmagnet ausgestaltete Magnet (1) mit sich radial erstreckenden Polschuhen (3,4) versehen ist, wobei das zur inneren Mantelfläche (14) des Jochs weisende Ende (5 bzw. 6) des Polschuhs in seiner Krümmung der Mantelfläche des Jochs angepaßt ist.

5. Drehsensor nach Anspruch 4, dadurch **gekennzeichnet**, daß zumindest einer der Polschuhe an seinem dem Joch zugewandten Ende (5,6) in tangentialer Richtung verbreitert ist.

6. Drehsensor nach einem der Ansprüche 1 bis 3, dadurch **gekennzeichnet**, daß der als Permanentmagnet ausgestaltete Magnet im wesentlichen die Form eines Zylinders bzw. Hohlzylinders hat, dessen Längsachse mit der Drehachse (2) fluchtet.
